# FASCICULE DE BREVET EUROPEEN

(11) **EP 0 977 518 B1**
(45) Date de publication et mention de la délivrance du brevet: **29.10.2003**
(21) Numéro de dépôt: 98924357.1
(22) Date de dépôt: 24.04.1998
(51) Int. Cl.: A61C 9/00

(54) **MODULE CONDITIONNEUR D'HYDROCOLLOIDE**
HYDROKOLLOID KONDITIONIERUNGSMODUL
HYDROCOLLOID CONDITIONING MODULE

(30) Priorité: 24.04.1997 FR 9705090
(43) Date de publication de la demande: 09.02.2000
(73) Titulaire: Jouvin, Jean-Luc, F-72000 Le Mans (FR); Jouvin, Frédéric, F-72000 Le Mans (FR)
(72) Inventeur: Jouvin, Jean-Luc, F-72000 Le Mans (FR); Jouvin, Frédéric, F-72000 Le Mans (FR)
(74) Mandataire: Breese, Pierre
(86) Numéro de dépôt international: FR9800832
(87) Numéro de publication internationale: WO98047442

(56) Documents cités:
- EP-A- 0 365 144
- EP-A- 0 603 411
- US-A- 4 489 235

## Description

La présente invention concerne un module de préparation et de conditionnement d'hydrocolloïdes.
Les hydrocolloïdes permettent de réaliser des empreintes de précision principalement dans le domaine dentaire. Pour les utiliser il faut chauffer la matière à 100 °C pendant environ 10 mn pour transformer le gel en sol, puis tempérer à 60 °C pour le conserver liquide. Il peut alors être injecté dans la cavité buccale, autour des dents et des préparations, sans risque de brûler le patient.

Il est en général recouvert par un autre hydrocolloïde irréversible que l'on appelle alginate. La température ambiante de cet alginate refroidira l'hydrocolloïde injecté précédemment autour des zones délicates à reproduire. Ce dernier est en effet plus précis que l'alginate, mais surtout beaucoup plus onéreux, ce qui fait que l'on a complètement abandonné son emploi exclusif dans une empreinte avec le système de refroidissement à eau intégré à des porte-empreintes spéciaux.

Il existe à l'heure actuelle deux types d'appareils à conditionner les hydrocolloïdes :
- des bacs thermostatés remplis d'eau à 100 et 60 °C ;
- des systèmes permettant de chauffer des carpules exclusivement. Ces systèmes gèrent plusieurs carpules à la fois. Les carpules sont introduites dans un bloc métallique (aluminium). Un élément chauffant serti dans le bloc assure son chauffage ; le tout est contrôlé par un microprocesseur. L'inertie thermique de tels systèmes est importante, et l'on ne peut gérer chaque carpule séparément.
La demande de brevet européen EP 603 411 présente un dispositif de chauffage et de refroidissement de ce type.

L'art antérieur connaît également de la demande de brevet européen EP 365 144 un dispositif de chauffage de compositions à usage dentaire, permettant de chauffer un seul récipient.

L'art antérieur connaît également du brevet américain US 4 489 235 un dispositif pour le chauffage d'hydrocolloïdes constitué de plusieurs bacs, dans lequel chaque récipient doit passer une durée déterminée dans chaque bac.

Le but de l'invention est de remédier aux inconvénients de l'art antérieur en proposant un dispositif pouvant se concevoir isolément ou intégré à un malaxeur d'alginate.

A cet effet, l'invention consiste en un procédé pour la préparation d'une pluralité de récipients contenant chacun un hydrocolloïde ou un anesthésique selon la revendication 1 et un dispositif pour la préparation d'hydrocolloïdes et/ou d'anesthésiques selon la revendication 5.

Le dispositif comporte des moyens de chauffage d'un récipient contenant un hydrocolloïde. Lesdits moyens de chauffage sont constitués par des résistances de préférence céramique de faible puissance isolées sur 3 faces transmettant leur chaleur que par la face supérieure en contact direct avec un tube de section extérieure carrée et de section intérieure circulaire de diamètre adaptée au diamètre des carpules d'hydrocolloïde ou d'anesthésique.

Avantageusement, la valeur des résistances se situe entre 0,5 kiloohms et 10 kiloohms, de préférence entre 1 KΩ et 4,7 KΩ, avec une température d'utilisation entre - 55 et + 250 °C. Ces valeurs étant adaptées au 220V, pour des tensions différentes, il convient de les ajuster proportionnellement.

Selon un mode de réalisation préféré, chaque résistance est en contact intime avec un thermostat de sécurité déclenchant la coupure de l'alimentation des résistances au cas où la température dépasse une valeur-seuil prédéterminée.

Selon une variante avantageuse, les tubes recevant les carpules sont réalisés dans un alliage présentant une bonne conductivité thermique tel que l'aluminium, ou le laiton.

Selon une autre variante, la partie arrière de chaque tube est fermée et percé à sa partie supérieure d'une fenêtre permettant à la lamelle incurvée d'un micro-contacteur d'y pénétrer, de sorte que lors de l'insertion d'une carpule, le contact est enclenché, et qu'il se coupe automatiquement lors de l'extrusion.

Avantageusement, la face inférieure de chaque résistance présente une résistance thermosensible délivrant un signal d'asservissement du chauffage.

Selon une variante préférée, chaque carpule est gérée séparément, de sorte que l'on peut avoir autant de programmes différents que de tubes.

Selon un mode de réalisation préféré, le dispositif selon l'invention comporte un circuit de commande pour réaliser les fonctions suivantes :
- réglage au préalable pour chaque tube d'une température maximale, et d'une température minimale ;
- affichage après introduction des carpules de la température du tube ;
- Signalisation de l'évolution de la température.

Les avantages du dispositif selon l'invention concerne les points suivants :
- Micro conditionneur très compact ne mesurant que 8x8x6 cm.
- Inertie thermique extrêmement réduite, permettant des montées en température extrêmement rapides (ainsi que des refroidissements tout aussi rapides).

Le dispositif est constitué dans un exemple non limitatif de réalisation par un boîtier contenant des blocs de chauffage formé chacun par un corps de bonne conduction thermique présentant un logement pour recevoir des carpules contenant l'hydrocolloïde à préparer. Le chauffage est assuré par des résistances céramique de très faible puissance de section 9x10x50 mm, isolées sur 3 faces, et ne transmettant leur chaleur que par la face supérieure en contact direct avec un tube de section extérieure carrée (10x10 mm). La section intérieure est circulaire de diamètre 9 mm environ, adaptée au diamètre des carpules d'hydrocolloïde. Ces carpules sont identiques d'ailleurs aux carpules d'anesthésique. La valeur des résistances se situe entre 0,5 KΩ et 10 KΩ, de préférence entre 1 KΩ et 4,7 KΩ, avec une température d'utilisation entre - 55 et + 250 °C.

Chaque résistance est en contact intime avec un thermostat de sécurité déclenchant la coupure de l'alimentation des résistances au cas où la température dépasserait 120 °C.

Ces tubes contenant les carpules ne pèsent que quelques grammes. Il sont réalisés dans un alliage très conducteur : aluminium, ou mieux laiton à cause des possibilités de soudure. La partie arrière de chaque tube est fermée, pour des raisons de sécurité (éclatement d'une carpule). Chaque tube est percé à sa partie supérieure d'une fenêtre permettant à la lamelle incurvée d'un micro-contacteur d'y pénétrer, de sorte que lors de l'insertion d'une carpule, le contact est enclenché, et qu'il se coupe automatiquement lors de l'extrusion.

Les micro contacteurs utilisés sont d'un type spécial résistant à la température.

Sur la face inférieure de chaque résistance, on colle une résistance " CTN " avec une colle résistant à la température, (ou tout autre système permettant de contrôler la température). On peut également mettre la résistance CTN à la face arrière du fût en laiton ou en aluminium. Cette résistance de précision 1%, renseignera le micro-processeur sur la température de chaque résistance céramique, donc de chaque tube porte carpule.

Chaque carpule est donc gérée séparément, de sorte que l'on peut avoir autant de programmes différents que de tubes.

Le programme se décompose de la manière suivante :

Pour chaque tube, il faut régler au préalable une température maximale, et une température minimale. Pour les hydrocolloïdes, la température maximale est comprise entre 95 et 100 °C et la minimale entre 60 et 65 °C ; pour les anesthésiques on règle les deux valeurs à la même température comprise entre 30 et 35 °C. Le programme prévoit dès que la température maximum est atteinte de la maintenir pendant 10 minutes, comme le préconisent les fabricants d'hydrocolloïdes, puis de redescendre à la température minimum, et de la maintenir jusqu'à l'extrusion de la carpule.

L'utilisateur introduit la carpule ; la température du tube s'affiche alors .

Pour déclencher le programme de chauffe, il doit appuyer une fois sur le contact. Pendant la montée en température, la LED s'allume en rouge et clignote. Dès la température maximum atteinte, elle reste rouge fixe pendant 10 minutes, puis elle s'allume en vert clignotant pendant la descente à la température minimum. Une fois celle-ci atteinte, elle reste verte fixe, jusqu'au moment où la carpule sera extraite.

Si l'utilisateur désire remettre une carpule encore chaude partiellement utilisée, il appuie deux fois sur le contact, ce qui maintiendra la température minimum, sans refaire tout le cycle. En effet, la qualité du produit est altérée au-delà de 3 cycles de chauffe.

Une troisième pression avec la carpule en place arrête le système.

L'extraction d'une carpule quelque soit le cycle arrête tout, dans le tube en question, et affiche la température.

Pour les anesthésiques, lorsque les deux températures minimum et maximum sont égales à 30 ou 35 °C par exemple, la LED clignote en vert lors de la montée en température, puis elle se stabilise en vert lorsque la température est atteinte.

L'invention est décrite dans ce qui précède à titre d'exemple non limitatif. L'homme du métier sera à même de réaliser différentes variantes de l'invention sans pour autant sortir du cadre de l'invention.

## Revendications

1. Procédé réalisé avec un dispositif selon la revendication 5 pour la préparation d'une pluralité de récipients contenant chacun un hydrocolloïde ou un anesthésique, ledit procédé comportant au moins une étape de positionnement desdits récipients chacun dans un logement et une étape de chauffage desdits récipients à l'aide de moyens de chauffage, **caractérisé en ce que** le chauffage de chaque récipient est géré séparément, de sorte que l'on peut avoir autant de programmes de chauffage différents que de logements.

2. Procédé selon la revendication 1, **caractérisé en ce que** l'on règle au préalable pour chaque tube une température maximale et une température minimale.

3. Procédé selon la revendication 1 ou la revendication 2, **caractérisé en ce que** l'on affiche après introduction des récipients dans les logements, la température de chaque logement.

4. Procédé selon l'une quelconque des revendications 1 à 3, **caractérisé en ce que** l'on affiche l'évolution de la température de chaque logement.

5. Dispositif pour la préparation d'hydrocolloïdes et/ou d'anesthésiques, ledit dispositif comportant une pluralité de logements pour la réception, dans chaque logement d'un récipient contenant un hydrocolloïde ou un anesthésique et des moyens de chauffage desdits récipients, **caractérisé en ce que** lesdits moyens de chauffage sont constitués chacun par une résistance, de préférence céramique de faible puissance, isolée sur 3 faces et ne transmettant sa chaleur que par la face supérieure en contact direct avec un logement, afin de permettre de gérer séparément le chauffage de chaque récipient.

6. Dispositif selon la revendication 5, **caractérisé en ce que** chaque logement est constitué d'un tube de section extérieure carrée et de section intérieure circulaire de diamètre adaptée au diamètre de carpules d'hydrocolloïde ou d'anesthésique.

7. Dispositif selon la revendication 5 ou la revendication 6, **caractérisé en ce que** la valeur des résistances se situe entre 0,5 KΩ et 10 KΩ, de préférence entre 1 KΩ et 4,7 KΩ, avec une température d'utilisation entre - 55 et + 250 °C, ces valeurs de résistances définies pour 220V, devant être modifiées proportionnellement, si la tension d'alimentation est différente.

8. Dispositif selon l'une quelconque des revendications 5 à 7, **caractérisé en ce que** chaque résistance est en contact intime avec un thermostat de sécurité déclenchant la coupure de l'alimentation de la résistance au cas où la température dépasse une valeur-seuil prédéterminée.

9. Dispositif selon l'une quelconque des revendications 5 à 8, **caractérisé en ce que** les logements recevant les récipients sont réalisés dans un alliage présentant une bonne conductivité thermique tel que l'aluminium, ou le laiton.

10. Dispositif selon l'une quelconque des revendications 5 à 9, **caractérisé en ce que** la partie arrière de chaque logement est fermée et chaque logement est percé à sa partie supérieure d'une fenêtre permettant à une lamelle incurvée d'un micro-contacteur d'y pénétrer, de sorte que lors de l'insertion d'un récipient, le contact est enclenché, et qu'il se coupe automatiquement lors de l'extrusion.

11. Dispositif selon l'une quelconque des revendications 5 à 10, **caractérisé en ce que** la face inférieure de chaque résistance présente une résistance thermosensible délivrant un signal d'asservissement du chauffage.

12. Dispositif selon l'une quelconque des revendications 5 à 11, **caractérisé en ce qu'**il comporte un circuit de commande pour réaliser les fonctions suivantes :
- réglage pour chaque tube d'une température maximale, et d'une température minimale ;
- affichage après introduction des récipients de la température du tube ;
- Signalisation de l'évolution de la température.

## Patentansprüche

1. Verfahren, erzielt mit einer Vorrichtung nach Anspruch 5, für die Präparierung einer Vielfalt von Behältnissen, die jeweils ein Hydrokolloid oder ein Anästhetikum enthalten, wobei das besagte Verfahren zumindest eine Etappe für die Positionierung der besagten Behältnisse in eine Mulde besitzt und eine Erwärmungsetappe der besagten Behältnisse mit einem Heizmittel, dahingehend gekennzeichnet, dass die Erwärmung jeder Behältnis separat verwaltet ist, so dass so viele verschiedene Heizprogramme möglich sind wie es Mulden gibt.

2. Verfahren nach Anspruch 1, dahingehend gekennzeichnet, dass für jedes Rohr eine Höchst- und eine Tiefsttemperatur voreinstellbar sind.

3. Verfahren nach Anspruch 1 oder Anspruch 2, dahingehend gekennzeichnet, dass nach Einsetzen der Behältnisse in die Mulden die Temperatur jeder Mulde angezeigt wird.

4. Verfahren nach einem der Ansprüche 1 bis 3, dahingehend gekennzeichnet, dass die Temperaturkurve jeder Mulde angezeigt wird.

5. Vorrichtung für die Präparierung von Hydrokolloiden und/oder Anästhetika, wobei die besagte Vorrichtung über mehrere Mulden für die Aufnahme, in jeder Mulde, einer mit einem Hydrokolloid oder einem Anästhetikum gefüllten Behältnis und über Heizmitteln für die besagten Behältnisse verfügt, dahingehend gekennzeichnet, dass die besagten Heizmittel jeweils aus einem Widerstand bestehen, bevorzugt aus Keramik mit schwacher Leistung, auf 3 Seiten isoliert und nur über die obere Seite wärmeleitend, die direkt mit der Mulde in Berührung kommt, um so eine separate Verwaltung der Erwärmung jeder Behältnis zu ermöglichen.

6. Vorrichtung nach Anspruch 5, dahingehend gekennzeichnet, dass jede Mulde aus einem Rohr, Außenquerschnitt viereckig, Innenquerschnitt rund besteht, mit einem Durchmesser, der auf den Durchmesser der Hydrokolloid- oder Anästhetikum-Karpulen abgestimmt ist.

7. Vorrichtung nach Anspruch 5 oder Anspruch 6, dahingehend gekennzeichnet, dass der Wert der Widerstände zwischen 0,5 kΩ und 10 kΩ liegt, am besten 1 kΩ bis 4,7 kΩ, mit einer Betriebstemperatur von -55 bis +250°C, wobei die für 220 V definierten Widerstandswerte proportional geändert werden müssen, wenn eine andere Versorgungsspannung gegeben ist.

8. Vorrichtung nach einer der Ansprüche 5 bis 7, dahingehend gekennzeichnet, dass jeder Widerstand eng mit einem Sicherheitsthermostat in Kontakt ist, dass bei Überschreiten eines voreingestellten Schwellenwertes die Unterbrechung des Stroms für die Versorgung des Heizwiderstandes auslöst.

9. Vorrichtung nach einem der Ansprüche 5 bis 8, dahingehend gekennzeichnet, dass die Mulden zur Aufnahme der Behältnisse aus einer Legierung mit guter Wärmeleitfähigkeit bestehen, zum Beispiel Aluminium oder Messing.

10. Vorrichtung nach einem der Ansprüche 5 bis 9, dahingehend gekennzeichnet, dass der hintere Teil jeder Mulde geschlossen ist und dass im oberen Teil jeder Mulde ein Fenster gebohrt ist, durch das die gekrümmte Lamelle eines Mikroschalters eindringen kann, derart, dass beim Einsetzen einer Behältnis der Kontakt geschlossen ist und er beim Ausstoßen automatisch geöffnet wird.

11. Vorrichtung nach einem der Ansprüche 5 bis 10, dahingehend gekennzeichnet, dass die Innenfläche jedes Widerstandes einen wärmeempfindlichen Widerstand hat, der ein Hitzewarmsignal sendet.

12. Vorrichtung nach einem der Ansprüche 5 bis 11, dahingehend gekennzeichnet, dass es einen Steuerkreislauf besitzt zur Erzielung folgender Funktionen:
- Einstellung einer Höchst- und einer Tiefsttemperatur für jedes Rohr;
- Anzeige der Rohr-Temperatur nach dem Einsetzen der Behältnisse;
- Anzeige der Temperaturkurve.

## Claims

1. Method using a device according to claim 5 for the preparation of several receptacles each containing a hydrocolloid or an anaesthetic, the said method comprising at least one step to position each of the said receptacles in a housing and one step to heat the said receptacles using heating means, **characterised in that** heating of each receptacle is managed separately, such that there can be a different heating program for each housing.

2. Method according to claim 1, **characterised in that** a maximum temperature and a minimum temperature are adjusted in advance for each tube.

3. Method according to claim 1 or claim 2, **characterised in that** the temperature in each housing is displayed after the receptacles have been inserted in the housings.

4. Method according to any one of claims 1 to 3, **characterised in that** the variation of the temperature of each housing is displayed.

5. Device for the preparation of hydrocolloids and / or anaesthetics, the said device comprising several housings, each of which will contain a receptacle containing a hydrocolloid or an anaesthetic, and means of heating the said receptacles, **characterised in that** each of the said heating means comprises a resistance, preferably a low power ceramic resistance, isolated on three faces and only transmitting heat through its upper face in direct contact with a housing in order to be able to manage heating of each receptacle separately.

6. Device according to claim 5, **characterised in that** each housing is composed of a tube with a square external section and a circular internal section with a diameter adapted to the diameter of hydrocolloids or anaesthetic carpules.

7. Device according to claim 5 or claim 6, **characterised in that** the value of the resistances is between 0.5 kΩ and 10 kΩ, and preferably between 1 kΩ and 4.7 kΩ, with a working temperature of between -55 and +250°C, and these resistance values defined for 220 V should be modified proportionally if the power supply voltage is different.

8. Device according to any one of claims 5 to 7, **characterised in that** each resistance is in intimate contact with a safety thermostat that triggers cutting off the power supply to the resistance if the temperature exceeds a predetermined limiting value.

9. Device according to any one of claims 5 to 8, **characterised in that** the housings in which the receptacles are fitted are made from an alloy with good thermal conductivity such as aluminium or brass.

10. Device according to any one of claims 5 to 9, **characterised in that** the rear part of each housing is closed and each housing is perforated near its top by a window enabling a curved lamella of a micro-contactor to penetrate into it such that the contact is closed when a receptacle is inserted, and that it is automatically opened when the receptacle is extracted.

11. Device according to any one of claims 5 to 10, **characterised in that** the lower face of each resistance has a temperature sensitive resistance outputting a heating slaving signal.

12. Device according to any one of claims 5 to 11, **characterised in that** it comprises a control circuit to perform the following functions:
- adjust a maximum temperature and a minimum temperature for each tube;
- display the tube temperature after insertion of the receptacles;
- signalling of temperature variations.
